# NEUE EUROPÄISCHE PATENTSCHRIFT

(11) **EP 1 689 959 B2**
(45) Veröffentlichungstag und Bekanntmachung des Hinweises auf die Entscheidung über den Einspruch: **03.11.2010**
(45) Hinweis auf die Patenterteilung: 18.07.2007
(21) Anmeldenummer: 04763552.9
(22) Anmeldetag: 28.07.2004
(51) Int. Cl.: E05B 65/20, B60J 5/04

(54) **TÜRINNENELEMENT FÜR EINE KRAFTFAHRZEUGTÜR MIT EINER ALS EINBRUCHSSICHERUNG DIENENDEN ABDECKUNG**
INSIDE DOOR ELEMENT FOR A MOTOR VEHICLE COMPRISING A COVER USED AS A BREAK-IN PREVENTION DEVICE
ELEMENT INTERIEUR DESTINE A UNE PORTIERE DE VEHICULE COMPORTANT UNE GARNITURE SERVANT DE SECURITE ANTI-EFFRACTION

(30) Priorität: 14.11.2003 DE 20317709 U
(43) Veröffentlichungstag der Anmeldung: 16.08.2006
(73) Patentinhaber: Integración De Montajes Y Plásticos, S.L., 20130 Urnieta, Guipuzcoa (ES)
(72) Erfinder: KREITZ, Thomas, 42719 Solingen (DE); ALMEIDA, Pedro, 49080 Osnabrück (DE)
(74) Vertreter: Meyer, Hans-Joachim
(86) Internationale Anmeldenummer: PCT/EP2004/008428
(87) Internationale Veröffentlichungsnummer: WO 2005/052290

(56) Entgegenhaltungen:
- EP-A- 1 134 339
- EP-A2- 1 129 874
- EP-B1- 0 794 076
- WO-A-99/61736
- DE-A1- 3 530 861
- DE-A1- 19 511 294
- DE-A1- 19 944 965
- FR-A- 2 825 665
- US-A- 5 435 609
- US-A- 5 548 930
- US-A1- 553 553
- US-A1- 5 820 191
- US-B1- 6 471 266

## Beschreibung

Die Erfindung betrifft ein Türinnenelement aus Kunststoff für eine eine heb- und senkbare Fensterscheibe aufweisende Kraftfahrzeugtür, mit einer Außenseite, einer Innenseite, einer von der Innenseite zur Außenseite führenden Öffnung zur Durchleitung eines der Betätigung eines Türschlosses dienenden Kraftübertragungselements in Form eines Bowdenzuges oder einer Betätigungsstange und einer dem Kraftübertragungselement zugeordneten Abdeckung als Einbruchssicherung gegen unbefugtes Entriegeln des Türschlosses von außen mittels eines Manipulationswerkzeuges.

Das Türinnenelement besteht im wesentlichen aus Kunststoff und weist eine von seiner Innenseite zur Außenseite führende Öffnung zur Durchleitung eines der Betätigung eines Türschlosses dienenden Kraftübertragungselements in Form eines Bowdenzuges oder einer Betätigungsstange auf.

Um ein unbefugtes Entriegeln der Fahrzeugtür von außen mittels eines Manipulationswerkzeuges zu verhindern, ist es grundsätzlich bekannt, den Bowdenzug bzw. die Betätigungsstange durch eine entsprechende Abdeckung zu sichern.

Derartige Einbruchssicherungen für Kraftfahrzeugtüren sind beispielsweise in der DE 35 30 861 A1 und der DE 44 34 307 C2 beschrieben. Die hieraus bekannten Abdeckungen sind als separate Teile ausgeführt und haben die Form eines Winkelelements bzw. Rohres, das an einem Türabschnitt, insbesondere einer Innenwand des Türbleches befestigt wird.

Aus der EP 1 129 874 A2 ist ein plattenförmiges, aus Kunststoff hergestelltes Türinnenelement für eine Kraftfahrzeugtür bekannt, das als Träger für verschiedene Komponenten, insbesondere eines Lautsprechers dient und eine von seiner Innenseite zur Außenseite führende Öffnung zur Durchleitung eines Bowdenzuges zur Betätigung einer Türschlosseinheit aufweist. Das Türinnenelement umfasst ferner eine Türschlossabdeckung, die auch einen Endabschnitt des Bowdenzuges abdeckt und ein unbefugtes Entriegeln des Türschlosses von außen mittels eines Manipulationswerkzeuges verhindern soll. Die äußere Form der Türschlossabdeckung stimmt in etwa mit der äußeren Form des Türschlosses überein. Die Türschlossabdeckung ist ein separat von dem Türinnenelement hergestelltes Bauteil. Sie kann jedoch auch einstückig an der Außenseite des Türinnenelements angeformt sein, wobei sie einen geschlossenen Kanal bildet, der den zum Türschloss führenden Endabschnitt des Bowdenzuges abdeckt.

Der vorliegenden Erfindung liegt die Aufgabe zugrunde, einen Bowdenzug zur Betätigung eines Kraftfahrzeug-Türschlosses oder eine entsprechende Betätigungsstange, der bzw. die mit einem Türinnengriff oder einer türinnenseitig angeordneten Verriegelungsvorrichtung gekoppelt ist, auf wirksame und kostengünstige Weise gegen einen Zugriff durch Manipulationswerkzeuge zu sichern, die zum Entriegeln der Fahrzeugtür von außen zwischen der Fensterscheibe und der äußeren Scheibendichtung in den Türhohlraum eingeführt werden.

Diese Aufgabe wird erfindungsgemäß durch ein Türinnenelement mit den Merkmalen des Anspruchs 1 gelöst.

Die dem Kraftübertragungselement zugeordnete Abdeckung ist einstückig an der Außenseite des Türinnenelements angeformt, wobei die Abdeckung in Form eines in Längsrichtung des Kraftübertragungselements verlaufenden offenen Kanals ausgebildet ist, wobei die Abdeckung aus mindestens zwei stegförmigen, voneinander beabstandeten Abdeckabschnitten gebildet ist, die im Wesentlichen senkrecht von der Außenseite des Türinnenelements abstehen, und wobei an den einander zugewandten Seiten der stegförmigen Abdeckabschnitte Querrippen angeformt sind, die beabstandet zu dem jeweils gegenüberliegenden stegförmigen Abdeckabschnitt enden, so dass ein von den stegförmigen Abdeckabschnitten definierter Kanal zur Aufnahme des Kraftübertragungselements durch die Querrippen eingeengt ist.

Die einstückige Anformung kann insbesondere bei der Herstellung des Türinnenelements im Spritzgußverfahren erfolgen. Es liegt aber auch im Rahmen der Erfindung, das einstückige Anformen der Abdeckung an das Türinnenelement im Spritzpräge- oder Prägeverfahren durchzuführen.

Das erfindungsgemäße Türinnenelement verhindert mit seiner integrierten Abdeckung wirkungsvoll ein unbefugtes Entriegeln der Fahrzeugtür durch Manipulationswerkzeuge, die von außen zwischen der Fensterscheibe und der äußeren Scheibendichtung in die Fahrzeugtür zum Ergreifen des Bowdenzuges bzw. einer entsprechenden Betätigungsstange eingeführt werden. Die einstückige Anformung der Abdeckung an dem aus Kunststoff vorzugsweise im Spritzgußverfahren hergestellten Türinnenelement führt zu einer Verringerung der zu montierenden Bauteile und damit zu einer Arbeitszeitersparnis und einer entsprechenden Kostenreduzierung.

Die erfindungsgemäße Lösung ermöglicht bei der Verwendung eines Bowdenzuges als Kraftübertragungselement einen Toleranzausgleich bei der Montage des Bowdenzuges. Der Abstand der stegförmigen Abdeckabschnitt kann bei dieser Ausgestaltung für einen Toleranzausgleich ausreichend groß gewählt und der Bowdenzug - falls erforderlich - leicht mäanderförmig in dem von den stegförmigen Abdeckabschnitten definierten Kanal verlegt werden, wobei die Querrippen ein wirkungsvolles Hindernis für ein zum Ergreifen des Bowdenzuges in die Tür eingeführtes Manipulationswerkzeug darstellen.

Es ist insbesondere günstig, wenn mindestens eine Querrippe des einen stegförmigen Abdeckabschnittes versetzt zu mindestens einer Querrippe des anderen stegförmigen Abdeckabschnittes angeordnet ist.

Weitere bevorzugte und vorteilhafte Ausgestaltungen der Erfindung sind in den Unteransprüchen angegeben.

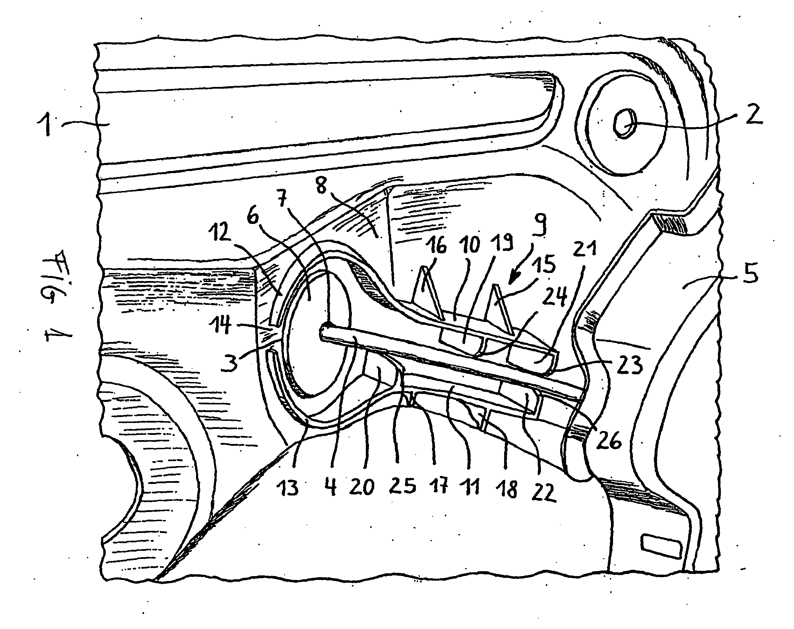

Im folgenden wird die Erfindung anhand einer ein Ausführungsbeispiel darstellenden Zeichnung näher erläutert. Die einzige Figur zeigt in perspektivischer Darstellung einen Abschnitt der Außenseite eines erfindungsgemäßen Türinnenelements 1, das zur Befestigung an einem Türinnenblech (nicht gezeigt) einer Kraftfahrzeugtür mehrere Durchbrüche 2 bzw. Bohrungen aufweist.

Bei dem Türinnenelement 1 handelt es sich um einen Aggregateträger, der der Halterung verschiedener Funktionskomponenten der Kraftfahrzeugtür, wie z.B. eines Fensterhebers, eines Türschlosses, eines Seitenairbags, einer Energieabsorptionsvorrichtung zum Schutz eines Fahrzeuginsassen bei einem Seitenaufprall und/oder von Lautsprechern dient.

Das Türinnenelement 1 weist eine Öffnung 3 zur Durchleitung eines Kraftübertragungselements 4 in Form eines in einer Bowdenhülle geführten Bowdenzuges auf. Der Bowdenzug 4 führt von einem außenseitig des Türinnenelements 1 angeordneten Türschloss (nicht gezeigt) zu einer in einer Türinnenverkleidung (nicht gezeigt) angeordneten Schlossbetätigungsvorrichtung, beispielsweise einem Türinnengriff. In der Zeichnung ist ein Abschnitt einer das Türschloss vor Nässe und/oder Manipulation schützenden Abdeckung 5 gezeigt.

Das Türinnenelement 1 besteht zumindest im Bereich der Öffnung 3 zur Durchleitung des Kraftübertragungselements 4 aus Kunststoff, vorzugsweise aus glasfaserverstärktem Kunststoff, beispielsweise aus glasfaserverstärktem Polypropylen. Besonders bevorzugt ist ein im Spritz-Schäumverfahren hergestellter Kunststoff. Ein derartig geschäumtes Türinnenelement wirkt schallisolierend und weist bei geringem Gewicht eine relativ hohe Festigkeit auf. Das im Spritz-Schäumverfahren (auch Thermoplast-Schaum-Gießen genannt) hergestellte Türinnenelement 1 weist eine kompakte Außenhaut und einen zelligen Kern auf.

In der Öffnung 3 ist eine ringförmige, gummielastische Dichtung 6 eingesetzt, die einen Durchbruch 7 zur Durchleitung des Bowdenzuges 4 aufweist. Die Öffnung ist 3 in einem schräg bzw. quer zur Grundebene des Türinnenelements 1 verlaufenden Abschnitt 8 des Türinnenelements 1 ausgebildet. Im Bereich um die Öffnung 3 bzw. Dichtung 6 herum und in Richtung des Türschlosses ist eine Abdeckung 9 einstückig angeformt, die als Einbruchssicherung gegen unbefugtes Entriegeln des Türschlosses mittels eines Manipulationswerkzeuges dient, das gegebenenfalls von außen zwischen der Fensterscheibe und der äußeren Scheibendichtung in die Fahrzeugtür zum Ergreifen des Bowdenzuges 4 eingeführt wird.

Die materialeinheitlich an dem Türinnenelement 1 angeformte Abdeckung 9 ist in Form eines offenen, in Längsrichtung des Bowdenzuges 4 verlaufenden Kanals ausgebildet. Sie ist aus zwei stegförmigen, voneinander beabstandeten Abdeckabschnitten 10, 11 gebildet, die im wesentlichen senkrecht von der Außenseite des Türinnenelements 1 abstehen. Die Abdeckung weist insbesondere zwei gekrümmte Abdeckabschnitte 12, 13 auf, die die Öffnung 3 bzw. ringförmige Dichtung 6 umgeben. Die beiden gekrümmten Abdeckabschnitte 12, 13 sind an ihren Enden durch eine Ausnehmung 14 voneinander getrennt. Die Höhe der Abdeckabschnitte 10, 11, 12, 13 ist so bemessen, dass sie den montierten Bowdenzug 4 um einen bestimmten Betrag, vorzugsweise um mindestens 5 mm, insbesondere um mindestens 10 mm überragen.

An den Außenseiten der stegförmigen Abdeckabschnitte 10, 11 sind Versteifungsrippen 15, 16, 17, 18 angeordnet. Die oberen Versteifungsrippen 15, 16 haben eine dreieckige Form mit einer schräg vom oberen Rand des stegförmigen Abdeckabschnittes 10 zur Außenseite des Türinnenelements 1 verlaufenden Kante, während die unteren Versteifungsrippen 17, 18 an die gekrümmte Kontur einer Ausprägung des Türinnenelements 1 anschließen und eine im wesentlichen auf Höhe des oberen Randes des stegförmigen Abdeckabschnittes 11 verlaufende Kante aufweisen.

An den einander zugewandten Seiten der stegförmigen Abdeckabschnitte 10, 11 sind Querrippen 19, 20 angeformt, die mit Abstand vor dem jeweils gegenüberliegenden stegförmigen Abdeckabschnitt 10 bzw. 11 enden. Der Abstand entspricht in etwa dem Maß, das sich aus der Summe des Durchmessers des Bowdenzuges 4 und der Erstreckung der nächstliegenden Querrippe 19 bzw. 20 des gegenüberliegenden stegförmigen Abdeckabschnittes 10 bzw. 11 in Richtung des Bowdenzuges 4 ergibt.

Die am Ende der Abdeckabschnitte 10, 11 ausgebildeten, einander zugewandten Querrippen 21, 22 liegen einander im wesentlich fluchtend gegenüber. Ihr Abstand entspricht in etwa dem Durchmesser des Bowdenzuges 4. Die Querrippe 19 des oberen Abdeckabschnittes 10 ist dagegen versetzt zu der Querrippe 20 des unteren Abdeckabschnittes 11 angeordnet, d.h. die Querrippen 19 und 20 fluchten nicht miteinander. Die Querrippen 19, 20, 21 und 22 schließen jeweils bündig mit dem zur Türaußenhaut weisenden Rand der Abdeckabschnitte 10, 11 ab und weisen jeweils abgerundete Außenecken 23, 24, 25 bzw. 26 auf.

Die Erfindung ist in ihrer Ausführung nicht auf das vorstehend beschriebene Ausführungsbeispiel beschränkt. Vielmehr sind mehrere Varianten möglich, die auch bei grundsätzlich abweichender Gestaltung von dem in Ansprüchen definierten Erfindungsgedanken Gebrauch machen. So kann die erfindungsgemäße Abdeckung 9 beispielsweise auch mehr Querrippen aufweisen als es bei der in der beiliegenden Zeichnung dargestellten Abdeckung der Fall ist. Ferner kann es sich bei dem Kraftübertragungselement 4 gegebenenfalls auch um eine Betätigungsstange handeln.

## Patentansprüche

1. Türinnenelement (1) aus Kunststoff für eine eine heb- und senkbare Fensterscheibe aufweisende Kraftfahrzeugtür, mit einer Außenseite, einer Innenseite, einer von der Innenseite zur Außenseite führenden Öffnung (3) zur Durchleitung eines der Betätigung eines Türschlosses dienenden Kraftübertragungselements (4) in Form eines Bowdenzuges oder einer Betätigungsstange und einer dem Kraftübertragungselement (4) zugeordneten Abdeckung (9) als Einbruchssicherung gegen unbefugtes Entriegeln des Türschlosses von außen mittels eines Manipulationswerkzeuges, wobei die Abdeckung (9) einstückig an der Außenseite des Türinnenelements (1) angeformt ist,
**dadurch gekennzeichnet, dass** die Abdeckung (9) in Form eines in Längsrichtung des Kraftübertragungselements (4) verlaufenden offenen Kanals ausgebildet ist, wobei die Abdeckung (9) aus mindestens zwei stegförmigen, voneinander beabstandeten Abdeckabschnitten (10, 11) gebildet ist, die im Wesentlichen senkrecht von der Außenseite des Türinnenelements (1) abstehen, und wobei an den einander zugewandten Seiten der stegförmigen Abdeckabschnitte (10, 11) Querrippen (19, 20, 21, 22) angeformt sind, die beabstandet zu dem jeweils gegenüberliegenden stegförmigen Abdeckabschnitt (10 bzw. 11) enden, so dass ein von den stegförmigen Abdeckabschnitten definierter Kanal zur Aufnahme des Kraftübertragungselements (4) durch die Querrippen (19, 20, 21, 22) eingeengt ist.

2. Türinnenelement nach Anspruch 1,
**dadurch gekennzeichnet, dass** an den Außenseiten der stegförmigen Abdeckabschnitte (10, 11) Versteifungsrippen (15, 16, 17, 18) angeordnet sind.

3. Türinnenelement nach Anspruch 1 oder 2,
**dadurch gekennzeichnet, dass** die Querrippen (19, 20, 21, 22) bündig mit einem zur Außenhaut der Fahrzeugtür weisenden Rand der Abdeckabschnitte (10, 11) abschließen.

4. Türinnenelement nach einem der Ansprüche 1 bis 3,
**dadurch gekennzeichnet, dass** die Querrippen (19, 20, 21, 22) abgerundete Außenecken (23, 24, 25, 26) aufweisen.

5. Türinnenelement nach einem der Ansprüche 1 bis 4,
**dadurch gekennzeichnet, dass** mindestens eine Querrippe (19) des einen stegförmigen Abdeckabschnittes (10) versetzt zu mindestens einer Querrippe (20) des anderen stegförmigen Abdeckabschnittes (11) angeordnet ist.

6. Türinnenelement nach einem der Ansprüche 1 bis 5,
**dadurch gekennzeichnet, dass** die Abdeckung (9) mindestens zwei gekrümmte Abdeckabschnitte (12, 13) aufweist, die die Öffnung zur (3) Durchleitung des Kräftübertragungselements (4) umgeben.

## Claims

1. A door inner element (1) made of plastic for a motor vehicle door which has a windowpane that may be raised and lowered, having an outer side, an inner side, an opening (3), leading from the inner side to the outer side, for passing through a force transmission element (4), used to actuate a door lock, in the form of a Bowden cable or an actuating rod and a cover (9), assigned to the force transmission element (4), as a break-in safeguard against unauthorized unlocking of the door lock from the outside using a manipulation tool, wherein the cover (9) is molded in one piece onto the outer side of the door inner element (1),
**characterized in that** the cover (9) is implemented in the form of an open channel running in the longitudinal direction of the force transmission element (4), wherein the cover (9) is formed by at least two web-shaped cover sections (10, 11), which are spaced apart from one another, that project essentially perpendicularly from the outer side of the interior door element (1), and wherein transverse ribs (19, 20, 21, 22), which end at a distance to the particular diametrically opposing web-shaped cover section (10 or 11, respectively), are molded onto the sides of the web-shaped cover sections (10, 11) facing toward one another, so that a channel for receiving the force transmission element (4), which channel is defined by the web-shaped cover sections, is constricted by the transverse ribs (19, 20, 21, 22)

2. The door inner element according to Claim 1, **characterized in that** stiffening ribs (15, 16, 17, 18) are positioned on the outer sides of the web-shaped cover sections (10, 11).

3. The door inner element according to Claim 1 or 2, **characterized in that** the transverse ribs (19, 20, 21, 22) terminate flush with an edge of the cover sections (10, 11) that points toward the external skin of the vehicle door.

4. The door inner element according to one of Claims 1 through 3, **characterized in that** the transverse ribs (19, 20, 21, 22) have rounded external corners (23, 24, 25, 26).

5. The door inner element according to one of Claims 1 through 4, **characterized in that** at least one transverse rib (19) of one web-shaped cover section (10) is positioned offset to at least one transverse rib (20) of the other web-shaped cover section (11).

6. The door inner element according to one of Claims 1 through 5, **characterized in that** the cover (9) has at least two curved cover sections (12, 13), which enclose the opening (3) for passing through the force transmission element (4).

## Revendications

1. Elément intérieur (1) en matière plastique pour une portière de véhicule présentant une vitre mobile de bas en haut, avec une face extérieure, une face intérieure, une ouverture allant de l'intérieur vers l'extérieur (3) pour le passage d'un élément de transmission (4) servant à la manoeuvre d'une fermeture de la portière, sous forme d'une commande Bowden ou d'une âme de manoeuvre et une garniture (9) affectée à l'élément de transmission (4) comme sécurité anti-effraction agissant contre le déverrouillage non autorisé de la fermeture de la portière, depuis l'extérieur à l'aide d'un outil de manipulation, ladite garniture (9) est formée d'une pièce sur la face extérieure de l'élément intérieur (1),
**caractérisé en ce que** la garniture (9) a la forme d'un canal ouvert se développant en direction longitudinale de l'élément de transmission (4), ladite garniture (9) est formée d'au moins deux segments de garniture (10, 11), distants l'un de l'autre, de type âme, qui s'écartent essentiellement perpendiculairement de la face extérieure de l'élément intérieur (1), et **en ce que** les faces orientées l'une vers l'autre des segments de garniture (10, 11) de type âme, des nervures transversales (19, 20, 21, 22) sont formées, qui se terminent à une certaine distance du segment de garniture (10, 11) de type âme, chaque fois opposé, de sorte qu'un canal défini par les segments de garniture de type âme est resserré par les nervures transversales (19, 20, 21, 22), pour la réception de l'élément de transmission (4).

2. Elément intérieur selon la revendication 1, **caractérisé en ce que** nervures raidisseuses (15, 16, 17, 18) sont agencées sur les faces extérieures des segments de garniture (10, 11) de type âme.

3. Elément intérieur selon la revendication 1 ou 2, **caractérisé en ce que** les nervures transversales (19, 20, 21, 22) sont fermées avec un bord des segments de garniture (10, 11), orienté vers la tôle de la portière.

4. Elément intérieur selon l'une des revendications 1 à 3, **caractérisé en ce que** les nervures transversales (19, 20, 21, 22) présentent des coins extérieurs arrondis (23, 24, 25, 26).

5. Elément intérieur selon l'une des revendications 1 à 4, **caractérisé en ce qu'**au moins une nervure transversale (19) d'un des segments de garniture (10) de type âme est agencé de manière décalée par rapport à au moins une nervure transversale (20) de l'autre segment de garniture (11) de type âme.

6. Elément intérieur selon l'une des revendications 1 à 5, **caractérisé en ce que** la garniture (9) présente au moins deux segments de garniture (12, 13) courbés, qui entourent l'ouverture (3) pour la passage de l'élément de transmission (4).
